# EUROPEAN PATENT APPLICATION

(11) **EP 1 698 762 A2**
(43) Date of publication of application: **06.09.2006**
(21) Application number: 06251139.9
(22) Date of filing: 02.03.2006
(51) Int. Cl.: F01D 25/18, F01D 11/04, F02C 7/32

(54) **Sealing of an aircraft engine accessory lubrication system**

(30) Priority: 03.03.2005 US 72840
(71) Applicant: Honeywell International Inc., Morristown, New Jersey 07960 (US)
(72) Inventor: Giesler, William L., Phoenix, AZ 85044 (US); Langston, Todd A., Chandler, AZ 85248 (US); Zonneveld, Jennifer L., Phoenix AZ 85048 (US); Mathis, David M., Phoenix, AZ 85044 (US); Byers, Cynthia S., Mesa, AZ 85215 (US)
(74) Representative: Hucker, Charlotte Jane

(57) **Abstract**

The present invention provides a lubrication system (100) for supplying lubricant between a first housing (112) and a second housing (114), where the first and second housings (112, 114) each comprising air and lubricant. In one exemplary embodiment, the system (100) includes a lubricant supply tube (102), an output shaft (130), and a seal assembly (110). The lubricant supply tube (102) extends at least partially through the second housing (114) and is configured to receive a supply of lubricant from the first housing (112). The output shaft (130) is rotationally mounted within the second housing (114). The seal assembly (110) is mounted on the output shaft (130) and disposed within the second housing (114). The seal assembly (110) is configured to pump at least a portion of the air out of the second housing (114).

## Description

### TECHNICAL FIELD

The present invention relates to aircraft engine accessories and, more particularly, to a seal for use in a lubrication system of an aircraft engine accessory.

### BACKGROUND

Turbine plant accessories, such as air turbine starters (ATS) may be mounted to a jet engine through a gearbox or other transmission assembly. These accessories may include several movable parts, such as a rotary shaft, and typically require lubrication to operate properly. In the case of an ATS, an assisted wet cavity (AWC) design has been employed in the past to assist in supplying lubrication to the ATS. These designs include an ATS housing having a mounting face or mounting flange that is sealingly engaged with, and coupled to, the gearbox to define a porting system. The porting system allows transfer of lubricating oil between the gearbox and the starter via a "make up system", i.e., during normal operation, lubricating oil first is provided to the gearbox and may be transferred to the starter if the starter lubricant quantity is below a specific level. The lubricating oil may enter a port in the porting system that is typically in fluid communication with passages within the starter housing and may or may not be distributed to the starter. Typically, the gearbox and accessory have an internal pressure above ambient pressure.

In the highly unlikely event of a starter housing breach and a change in pressure, the starter pressure may drop to equalize with ambient pressure.
Consequently, a pressure difference between the starter housing and gearbox may result. This pressure differential may result in excessive lubricating oil, flowing through a drain or scavenge line of the gearbox resulting in a leak from the gearbox to the starter and, consequently, out through the breach.

In recent lubrication system designs, a check or reed valve has been used to counteract the potential oil loss through the drain or scavenge line. However, it has been found that because the pressure differential between the starter and gearbox can be small, these check valves may not work consistently. Additionally, although the starter is generally enclosed to prevent oil leakage from other sections, the breach may cause oil to leak out of the starter from a gap between the starter housing and rotary shaft.

Accordingly, there is a need for a lubrication system capable of providing a metered fluid flow between a turbine plant accessory and a gearbox assembly. There is also a need for a system having improved fluid flow control in the unlikely event of an accessory housing breach including a seal between the starter housing and the rotary shaft. Furthermore, other desirable features and characteristics of the present invention will become apparent from the subsequent detailed description of the invention and the appended claims, taken in conjunction with the accompanying drawings and this background of the invention.

### BRIEF SUMMARY

The present invention provides a lubrication system for supplying lubricant between a first housing and a second housing, where the first and second housings each comprising air and lubricant. In one exemplary embodiment, the system includes a lubricant supply tube, an output shaft, and a seal assembly. The lubricant supply tube extends at least partially through the second housing and is configured to receive a supply of lubricant from the first housing. The output shaft is rotationally mounted within the second housing. The seal assembly is mounted on the output shaft and disposed within the second housing. The seal assembly is configured to pump at least a portion of the air out of the second housing.

In another embodiment, and by way of example only, the system includes a lubricant supply tube, a receptacle, a check valve, an output shaft, a seal case, a seal stator, and a seal rotor. The lubricant supply tube extends at least partially through the second housing and is configured to receive a supply of lubricant from the first housing. The receptacle is disposed within the second housing and is configured to receive lubricant supplied from the supply tube and to hold a predetermined volume of the lubricant therein. The check valve is disposed within the second housing and is configured to receive lubricant and to provide a seal between the first and second housings in response to a pressure differential therebetween. The output shaft is rotationally mounted within the second housing. The seal case is mounted on the second housing. The seal stator is mounted within the seal case, and the seal stator has a face. The seal rotor is mounted on the output shaft and has a side facing the seal stator face. The seal rotor is configured to pump air from the second housing to first housing.

In another exemplary embodiment, a method is provided for supplying lubricant between a first environment and a second environment, wherein the first environment comprises air and is disposed within a first housing and the second environment is disposed within a second housing having a supply opening and an exhaust opening. The method includes the steps of supplying lubricant through a tube from the first environment to the second environment, receiving the lubricant into a receptacle having a predetermined volume, flowing overflow lubricant from the receptacle when the lubricant exceeds the predetermined volume, sealing the second housing in response to a pressure differential therebetween, and pumping at least a portion of the air out of the second housing.

Other independent features and advantages of the preferred system will become apparent from the following detailed description, taken in conjunction with the accompanying drawings which illustrate, by way of example, the principles of the invention.

### BRIEF DESCRIPTION OF THE DRAWINGS

FIG. 1 is a schematic of an exemplary lubrication system;

FIG. 2 is a cross sectional view of the exemplary lubrication system of FIG. 1 implemented within an air turbine starter (ATS);

FIG. 3 is a cross sectional view of an exemplary stator seal assembly that may be implemented into the lubrication system shown in FIG. 1;

FIG. 4 is an isometric view of an exemplary rotor seal assembly that may be used with the stator seal assembly of FIG. 3;

FIG. 5 is a partial view of an exemplary rotor that may be used with the rotor seal assembly depicted in FIG. 4; and

FIG. 6 is another exemplary rotor that may be used with the rotor seal assembly depicted in FIG. 4.

### DETAILED DESCRIPTION OF A PREFERRED EMBODIMENT

Before proceeding with the detailed description, it should be appreciated that the present invention is not limited to use in conjunction with a specific type of rotating machine. Thus, although the present invention is, for convenience of explanation, depicted and described as being implemented in a turbine starter, it should be appreciated that it can be implemented in numerous other machines including, but not limited to, various generators, pumps, or other shaft driven accessories having a need for lubrication.

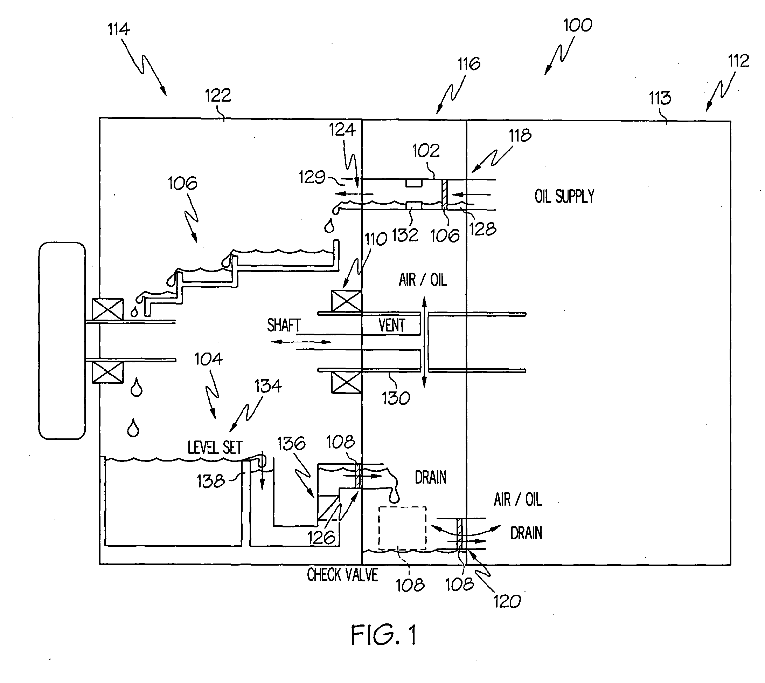

Turning now to the description, FIG. 1 provides a schematic of an exemplary lubrication system 100. The lubrication system 100 includes a lubrication supply tube 102, a lubricant control assembly 104, filters 106 and 108, and a mechanical face seal assembly 110. It will be appreciated, however, that the mechanical face seal assembly may be any other alternative seal including, but not limited to, a lip seal, hydrodynamic seal, a ring seal (piston ring, multiple segmented piston ring, multiple segmented piston ring with hydrodynamic features in the seal or on the shaft), or a brush seal. The components of the lubrication system 100 are implemented into a gearbox 112 and a turbine plant accessory 114. The gearbox 112 and accessory 114 are coupled to one another by an intermediate housing 116. The intermediate housing 116, which may be, for example, a quick attach-detach plate, serves as an extension of the gearbox 112 and provides a buffer zone for lubricant or air that may flow between the gearbox 112 and accessory 114. However, as will be appreciated by those with skill in the art, the gearbox 112 and accessory 114 alternatively may be directly coupled to one another.

The gearbox 112 is disposed within a gearbox housing 113 and typically includes a non-illustrated lube oil supply pump that feeds lubricant to the gearbox 112 and a plurality of passages (not shown) through which oil freely passes to supply lubrication to the gearbox 112 components. The passages are in fluid communication with the accessory 114 via a lubrication exhaust opening 118 and a lubrication return opening 120.

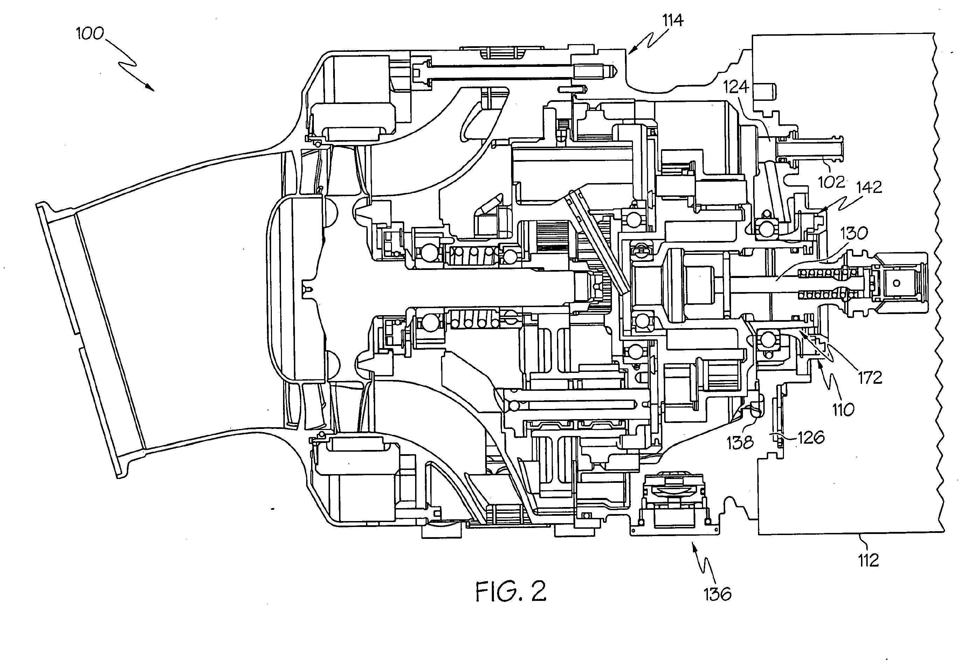

The accessory 114 preferably receives lubricant from the gearbox 112 and may be any one of numerous types of devices, components, or systems conventionally coupled to a gearbox. For example, the accessory 114 may be an air turbine starter, such as the exemplary air turbine starter depicted in FIG. 2. Returning to FIG. 1, the accessory 114 is disposed within a housing 122 and communicates with the gearbox 112 and intermediate housing 116 via a supply opening 124 and an exhaust opening 126 formed in the accessory housing 122.

The lubrication supply tube 102 supplies lubricant from the gearbox 112 to the accessory 114 and, in this regard, extends between the gearbox 112 and accessory 114. In one exemplary embodiment, such as shown in FIG. 1, a section of the lubrication supply tube 102 is disposed within the gearbox lubrication exhaust opening 118 and another section is disposed within the accessory housing supply opening 124. As appreciated by those with skill in the art, however, any suitable opening within the accessory housing 122 proximate the gearbox 112 that provides entry into the housing 122 may be employed. The lubrication supply tube 102 includes an inlet 128 and outlet 129.

The lubrication supply tube 102 may have any one of numerous configurations, and may be further designed to supply the lubricant at a predetermined flow rate. In an exemplary embodiment, the flow rate is regulated by the size of the lubricant supply tube inlet 128. For example, if the inlet 128 has a small diameter, less lubricant will flow into the accessory 114; however, if the inlet 128 has a large diameter, more lubricant will flow into the accessory 114. In another exemplary embodiment, the lubrication supply tube 102 is configured to operate with a flow regulator 132. The flow regulator 132, if included, is coupled to the lubrication supply tube 102, and any one of numerous conventional flow regulators may be employed and therefore coupled thereto. Examples of suitable flow regulators include, but are not limited to, regulator orifices, fluidic devices, valves, and pressure regulators. In another exemplary embodiment, the lubricant flow rate is controlled to a constant magnitude. Alternatively, the flow regulator 132 may include an adjustment mechanism configured to allow an operator to customize the flow rate.

The lubricant control assembly 104 regulates the supply and return of lubricant between the gearbox 112 and accessory 114. The lubricant control assembly 104 includes a receptacle 134 and a check valve assembly 136, which are each configured to provide different regulating functions.

The receptacle 134 is configured to indicate whether the amount of lubricant within the accessory 114 exceeds a predetermined threshold. In one exemplary embodiment, the receptacle 134 has at least a sidewall 138, such as a wall constructed from a standpipe, having a predetermined height that extends from the accessory housing 122. The sidewall 138 and accessory housing 122, together, define a predetermined volume. Alternatively, the receptacle 134 is a cup that is coupled to a desired section of the accessory housing 122. When the volume of lubricant collected in the receptacle 134 exceeds the predetermined volume of the receptacle 134, the excess lubricant spills over the sidewall 138 and flows toward the check valve assembly 136.

The check valve assembly 136 is configured to selectively open or close in response to a pressure differential existing between the interior portion of the gearbox 112 and the interior of the accessory 114, such as, for example, a pressure differential in the range of about 0.1 psi to about 10 psi. Any one of numerous suitable check valve configurations may be employed, including, but not limited, those configurations disclosed in U.S. Patent Application Serial No. 10/732,935, entitled AIR TURBINE STARTER HAVING A LOW DIFFERENTIAL CHECK VALVE, filed December 10, 2003, U.S. Appln. No. , entitled "PASSIVE IMPROVED AIR TURBINE STARTER LUBRICATION SYSTEM" filed on February 27, 2004 and U.S. Appln. No. , entitled "AIR TURBINE STARTER HAVING A FORCE BALANCED, PRESSURE ENERGIZED, WEIGHTED CHECK VALVE" filed on February 24, 2004, all of which are incorporated herein by reference.

Preferably, the check valve assembly 136 is disposed within the accessory housing 122 proximate its exhaust opening 126, which provides an outlet through which excess lubricant exits the accessory 114. Turning to FIG. 2, in one exemplary embodiment, the check valve assembly 136 is located towards the outer periphery of the accessory housing 122 and is mounted within a valve opening 140. In another exemplary embodiment, the accessory housing 122 includes additional walls or cover plates that cover certain accessory components within which valve openings may be formed and the check valve assembly 136 is placed in or over one of the wall or cover plate openings. Although FIG. 2 illustrates one valve opening 140, more than one valve opening between the accessory 114 and gearbox 112 may be employed. In the case of more than one valve opening, either the same number of check valve assemblies or a check valve assembly used in conjunction with other valve assemblies will typically be employed.

It will be appreciated that the position of the check valve assembly 136 relative to the exhaust opening 126 facilitates the return of the lubricant to the gearbox 112. In one exemplary embodiment, such as in the embodiment depicted in FIG. 1, the check valve assembly 136 is positioned below the exhaust opening 126 so that the lubricant drains to and collects in the check valve assembly 136. Additionally, when the pressure differential between the accessory 114 and gearbox 112 environments is about 0 psi, a pressure differential still exists due to the head of fluid over the check valve assembly 136 relative to the accessory housing 122 to immerse the check valve assembly 136 in fluid or oil. Consequently, oil and/or air passes between the accessory 114 and gearbox 112 with little to no restriction.

As previously noted, the accessory 114 preferably includes a plurality of filters 106 and 108 for removing particles or contaminants that may be present in the lubricant. The filters 106 and 108, which can each have any one of numerous configurations, are placed along various sections of the accessory 114. In one exemplary embodiment, and as noted above, the filter 106 is placed proximate the lubricant supply tube 102. In another exemplary embodiment, the filter 106 is instead, or in addition, coupled upstream of the lubricant control assembly 104 and is a series of shelves or zones that are each configured to allow lubricant to pool therein. As the lubricant fills a first shelf or zone, gravity causes particles and contaminants in the lubricant to settle onto the shelf or zone. When an excess of lubricant is present on the shelf or zone the excess lubricant spills to the next shelf or zone and repeats the settling process.

In another exemplary embodiment, a filter 108 is coupled downstream of the lubricant control assembly 104 and lubricating oil is filtered prior to returning to the gearbox 112. In one exemplary embodiment, the downstream filter 108 is coupled to the accessory housing 122 at the exhaust opening 126. In another exemplary embodiment shown in phantom in FIG. 1, the filter 108 is positioned within the intermediate housing 116 between the exhaust opening 126 and the lubricant return opening 120. In yet another exemplary embodiment, the filter 108 is mounted to the gearbox housing 104 and over the lubricant return opening 120. The filter 108 may be any one of numerous types of mechanisms conventionally used for cleaning particles out of a liquid, such as a screen, a sieve, strainer, or any other filtering mechanism.

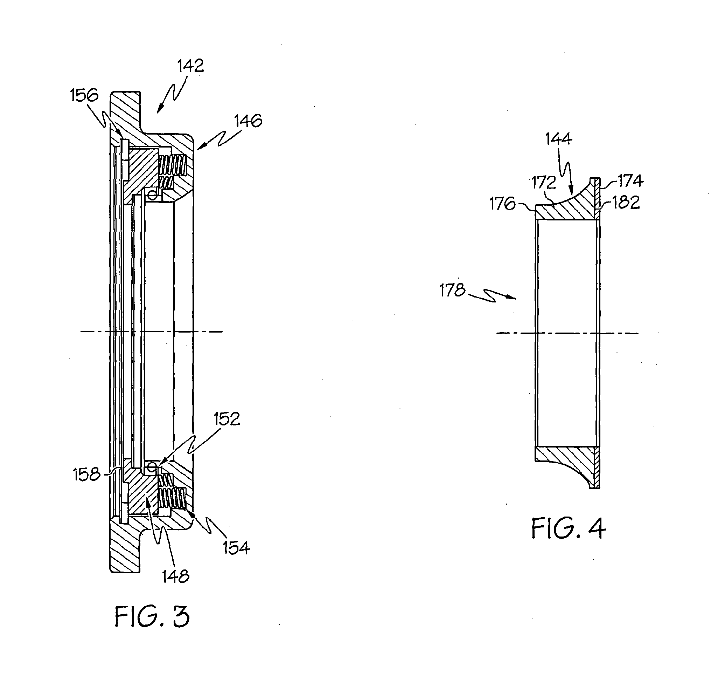

The face seal assembly 110 seals lubricant within the accessory 114 by providing a close clearance seal between an output shaft 130 and the accessory 114 components. With reference to FIGs. 3 and 4, the face seal assembly 110 includes a stator seal assembly142 and a rotor seal assembly 144. With reference to FIG. 3, the stator seal assembly 142 includes a seal case 146, a seal stator 148, an O-ring 152, a multitude of coil springs 154, a retaining ring 156, and may additionally include a non-illustrated seal washer or the multitude of coil springs may be replaced with a non-illustrated wave spring washer. The seal case 146 is configured to contain some of the components of the stator seal assembly 142 and is preferably mounted against rotation in the housing proximate an opening through which shaft 130 extends. The seal stator 148 includes a flat annular face, or sealing face 158, which sealingly engages rotor seal assembly 144. The seal stator 148 is mounted against rotation in the seal case 146 and is preferably biased to contact the rotor seal assembly 144 by the springs 154. Additionally, the seal stator 148 is preferably retained within the seal case 146 by a retaining ring 156, and the junction between the seal stator 148 and the seal case 146 is sealed by the O-ring 152.

Other stator assembly configurations may be used with the rotor seal assembly 144 as well. In one exemplary embodiment, the stator seal assembly 142 sealingly engages the rotor seal assembly 144 by rotationally sliding contact between the stator flat annular face 158 and a portion of the rotor seal assembly 144 fixed to the rotating shaft 130. In another exemplary embodiment, the seal stator 148 sealingly engages the rotor seal assembly 144 by riding a fluid film, such as an air film, between the stator flat annular face 158 and a sealing surface on the rotor seal assembly 144 adapted for film-riding. In other alternate embodiments, the stator sealing face 158 sealingly engages the rotor seal assembly 144 by riding a fluid film between the rotor assembly sealing surface and the stator face 158 which is adapted for film-riding. Suitable film-riding surfaces include, but are not limited to spiral grooves, shrouded or unshrouded Rayleigh pads, wave, trapezoid, rectangle, truncated spiral grooves, for example, those described in U.S. Patent No. 5,385,409, U.S. Patent No. 5,873,574, U.S. Patent No. 4,836,561, and U.S. Patent No. 4,887,395, each of which are incorporated herein by reference.

Turning now to FIG. 4, the rotor seal assembly 144 includes a main rotor, or body, 172, which has a first side 174, a second side 176, and a central opening 178 for mounting the rotor seal assembly 144 on the turbine shaft 130. The rotor seal assembly 144 may have any configuration, and, for example, may be an annulus having a circular central opening 178. It will be appreciated that, in other embodiments, the central opening 178 may have a non-circular cross-section and the rotor seal assembly 144 may not be an annulus.

At least a portion 182 of the rotor assembly first side 174 is adapted to sealingly engage the stator seal assembly 142 and is preferably configured to pump air from an outer peripheral surface of the rotor seal assembly first side 174 to an inner peripheral surface of the rotor seal assembly first side 174. Consequently, air is thereby pumped from inside of the accessory 114 to either the intermediate housing 116 or elsewhere, such as, for example, the engine gear box 112.

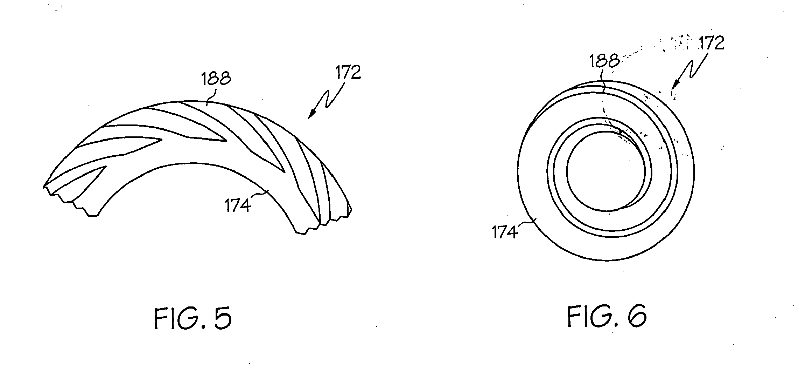

In one example, as illustrated in FIGs. 5 and 6, the rotor seal assembly first side 174 includes grooves 188 formed therein. The grooves 188 may have any one of numerous configurations, such as spiral, curved, annular, wave, Rayleigh, or any other configuration to force gaseous fluid, such as air, radially inward from the housing 122 to the gearbox 112 through the intermediate housing g116 when the rotor 172 is appropriately rotated relative to the stator annular face 158. With additional reference to FIG. 4, in another exemplary embodiment, the first side 174 may include a seal layer 182 that extends axially away from the first side 174 extending radially to a dimension to appropriately engage the stator seal assembly 142 and may have the grooves 188 formed therein. The seal layer 182 may be a different material than the rotor 172. For example, a chromium seal coating layer 182 may be used on a steel alloy rotor 172. The seal layer 182 of the rotor 172 may be adapted for generating a film between the rotor seal layer 182 and the seal stator annular face 158 for film-riding, as is known in the art.

The accessory 114, as has been previously mentioned, may be any one of numerous types of devices, components, or systems including, for example, an air turbine starter. Turning back to FIG. 2, lubricating oil from the gearbox 112 enters into the ATS 114 via the lubricant supply tube 102, which is mounted in the supply opening 108 that is proximate the gearbox 112. The oil flows through a series of non-illustrated filters into the standpipe 138. Once the standpipe 138 is filled, the excess oil spills to the check valve assembly 136. The remaining lubricant is sealed within the ATS 114 and, when the rotor 172 is appropriately rotated, air is pumped from the outer peripheral surface of the rotor 172 to the inner peripheral surface of the rotor 172 to thereby cause the air to be pumped out of the ATS 114. Any entrained oil in the air is also pumped from the housing 122 to the gearbox 112.

Thus, a lubrication system having an improved fluid flow control has been provided. The system can be implemented into an accessory of a gearbox, such as, for example an air turbine starter. The system can also implemented into any generator, pump, or shaft-driven accessory that may need lubricant from a gearbox. The lubrication system may be used under the conditions of an accessory housing puncture and in particular, in instances when the breach causes a pressure differential between the accessory and gearbox. Consequently, the radial direction of the air/oil pumping air film riding seal protects the oil in the engine gearbox and prevents the loss of lubrication from the gearbox in the event of a breach in the air turbine starter.

While the invention has been described with reference to a preferred embodiment, it will be understood by those skilled in the art that various changes may be made and equivalents may be substituted for elements thereof without departing from the scope of the invention. For example, the contact face 188 of the rotor may be rotated or flipped 180 degrees and mounted on the shaft in the opposite direction as shown in FIG. 2. The housing may also be rotated 180 degrees and the direction of the air film riding features would then be reversed to thereby maintain pumping from the housing 122 to the gearbox 112 through the intermediate housing 116. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A lubrication system (100) for supplying lubricant between a first housing (112) and a second housing (114), the first and second housings (112, 114) each comprising air and lubricant, the system (100) comprising:
a lubricant supply tube (102) extending at least partially through the second housing (114) and configured to receive a supply of lubricant from the first housing (112);
an output shaft (130) rotationally mounted within the second housing (114); and
a seal assembly (110) mounted on the output shaft (130) and disposed within the second housing (114), the seal assembly (110) configured to pump at least a portion of the air out of the second housing (114).

2. The lubrication system (100) of claim 1, wherein the seal assembly (110) further comprises:
a seal case (146) mounted on the second housing (114);
a seal stator (148) mounted within the seal case (146), the seal stator (148) having a face (158); and
a seal rotor (172) mounted on the output shaft (130) and having a side (174) facing the seal stator face (158), the side (174) having an inner peripheral surface and an outer peripheral surface, the seal rotor (172) configured to pump air from the outer peripheral surface to the inner peripheral surface to thereby pump the air out of the second housing (114).

3. The lubrication system (100) of claim 2, wherein the seal rotor (172) includes grooves (188) formed therein.

4. The lubrication system (100) of claim 3, wherein the seal rotor (172) further comprises a seal layer (182) coupled to the seal rotor side (174) and the grooves (188) are formed in the seal layer (182).

5. The lubrication system (100) of claim 1, further comprising a receptacle (134) disposed within the second housing (114) and configured to receive lubricant supplied from the supply tube (104) and to hold a predetermined volume of the lubricant therein.

6. The lubrication system (100) of claim 1, further comprising:
a flow regulator (132) coupled to the supply tube (104) and configured to regulate a rate at which the lubricant flows from the first housing (112) to the second housing (114).

7. The lubrication system (100) of claim 1, further comprising a third housing (116) coupled between the first housing (112) and the second housing (114).

8. The lubrication system (100) of claim 1, wherein the lubricant includes contaminants, and wherein the system further comprises:
a filter (106) coupled to the supply tube (104) and configured to remove at least a portion of the contaminants from the lubricant.

9. The lubrication system (100) of claim 1, wherein the lubricant includes contaminants, the system further comprising:
a filter (108) coupled to an exhaust opening (126) of the second housing (114) to thereby remove at least a portion of the contaminants from the lubricant.

10. The lubrication system (100) of claim 1, wherein the lubricant includes contaminants, the system further comprising:
a check valve (136) disposed within the second housing (114) and configured to provide a seal between the first and second housings (112, 114) in response to a pressure differential therebetween.
